# EUROPEAN PATENT SPECIFICATION

(11) **EP 1 997 674 B1**
(45) Date of publication and mention of the grant of the patent: **02.02.2011**
(21) Application number: 06843784.7
(22) Date of filing: 28.12.2006
(51) Int. Cl.: B60N 2/30, B60N 2/36

(54) **TIP-UP TYPE AUTOMOTIVE SEAT**
KLAPP-FAHRZEUGSITZ
SIEGE D'AUTOMOBILE A BASCULEMENT

(30) Priority: 28.12.2005 JP 2005378862
(43) Date of publication of application: 03.12.2008
(73) Proprietor: TS Tech Co., Ltd., Asaka-shi, Saitama 351-0012 (JP)
(72) Inventor: ABE, Hirohisa c/o TS Tech Co., Ltd., Shioya-gun, Tochigi 329-1217 (JP); TSUJIBAYASHI, Toshiyuki c/o TS Tech Co., Ltd., Shioya-gun, Tochigi 329-1217 (JP)
(74) Representative: Pulieri, Gianluca Antonio
(86) International application number: PCT/JP2006/326415
(87) International publication number: WO 2007/077980

(56) References cited:
- EP-A- 1 407 923
- JP-A- 2003 011 707
- JP-A- 2005 212 554
- US-A- 4 919 482

## Description

### FIELD OF THE INVENTION

The present invention relates to a tip-up type automotive seat which includes a seat back and a seat cushion adapted to be capable of being tipped up from a used position, at which the seat cushion becomes a substantially horizontal posture, to a tipped-up position at which the seat back becomes opposed to the seat back in a substantially vertical posture.

### BACKGROUND OF THE INVENTION

As an automotive seat, there is known a tip-up type automotive seat in which a seat cushion of the automotive seat is allowed to be tipped up from a used position, at which the seat cushion becomes a substantially horizontal posture, to a tipped-up position at which the seat cushion becomes opposed to a seat back of the automotive seat in a substantially vertical posture, in order that a space on a portion of an automotive body floor which is located under the seat cushion when located in the used position can be used as a storage space for any baggage or luggage at the time of non-use of the automotive seat. This tip-up type automotive seat is provided with a tipping-up lock mechanism for releasably locking the seat cushion in the tipped-up position at which the seat cushion becomes opposed to the seat back, when the seat cushion is pivoted to the tipped-up position in one motion (Japanese Patent Application Laid-Open No. 2005-212554).

In the automotive seat disclosed in said Japanese Patent Application Laid-Open No. 2005-212554, on which the preamble of claim 1 is based, the tipping-up lock mechanism is adapted to lock the seat cushion in the tipped-up position only, and is not configured so as to also lock the seat cushion in a middle position between the used position and the tipped-up position.

If the seat cushion of such an automotive seat can be configured to be also locked in a middle position between the used position and the tipped-up position by the tipping-up lock mechanism, any various baggage or luggage can be advantageously stored in the following manner. That is, for example, any longitudinal baggage or luggage is carried on the portion of the automotive body floor, whereas any small baggage or luggage can be stored in a space between the seat cushion locked in the middle position and the seat back in the substantially vertical posture.

### SUMMARY OF THE INVENTION

It is an object of the present invention to provide a tip-up type automotive seat including a tipping-up lock mechanism which can cause a seat cushion of the automotive seat to be selectively and releasably locked in a used position, a tipped-up position, and a middle position between the used position and the tipped-up position, with reliability.

It is another object of the present invention to provide a tip-up type automotive seat including a tipping-up lock mechanism which can cause a seat cushion of the automotive seat to be securely unlocked in each of a used position, a tipped-up position, and a middle position between the used position and the tipped-up position.

In accordance with the present invention, there is provided a tip-up type automotive seat having the features set forth in claim 1. The automotive seat comprises a seat back including a pair of first spaced apart side brackets, a seat cushion including a pair of second spaced apart side brackets, the second side brackets having upwardly curved rear portions, the second side brackets of the seat cushion being pivotally supported at the upward curved rear portions thereof to portions of the first side brackets of the seat back, which are adjacent lower end portions of the first side brackets of the seat back, by first support pins, whereby the seat cushion is allowed to be pivoted about the first support pins from a used position, at which the seat cushion becomes a substantially horizontal posture, to a tipped-up position at which the seat cushion becomes opposed to the seat back in a substantially vertical posture, the upwardly curved rear portions of the second side brackets being formed so as to have substantially semicircle-shaped edges extending around the first support pins, a tipping-up lock mechanism for selectively and releasably locking the seat cushion with respect to the seat back, in the used position, the tipped-up position, and a middle position between the used position and the tipped-up position, the tipping-up lock mechanism including a latch, a cam, and first, second, and third cutout teeth, the first, second, and third cutout teeth being provided at a substantially semicircle-shaped edge of an upward curved rear portion of one of the second side brackets so as to be in turn arranged from a rearward direction of the substantially semicircle-shaped edge toward a forward direction of the substantially semicircle-shaped edge, the first cutout tooth serving as means to facilitate causing of the seat cushion to be releasably locked in the used position, the second cutout tooth serving as means to facilitate causing of the seat cushion to be releasably locked in the middle position, the third cutout tooth serving as means to facilitate causing of the seat cushion to be releasably locked in the tipped-up position, the latch being swingably supported via a second support pin to corresponding one of the first side brackets of the seat back, the latch including a protruding tooth provided at a lower edge of a rearward portion of the latch for selectively and releasably engaging the first, second, and third cutout teeth, an engaging step portion formed in an upper region of the rearward portion of the latch, and a recess portion formed in the upper region of the rearward portion of the latch so as to continue from an edge of the engaging step portion, the cam having a body and a lower portion extending downward from the cam body, the cam being swingably supported via a third support pin to the corresponding one of the first side brackets of the seat back with the lower portion thereof being releasably abutted against the engaging step portion of the latch, the cam having an angle with respect to the latch, the angle being set in such a manner that an angle between a reference line connecting an axial center of the second support pin of the latch and an abutment point of the lower portion of the cam against the engaging step portion of the latch, and a line connecting an axial center of the third support pin of the cam and the abutment point is kept to be an acute angle, and an operating lever coupled to the cam for causing the tipping-up lock mechanism to be unlocked and causing the seat cushion to be brought to a condition where the seat cushion is allowed to be pivoted, the recess portion of the latch having a depth which is not less than a height of an engaged portion between the protruding tooth of the latch and each of the first, second, and third cutout teeth, so that when the cam is pulled up by pulling of the operating lever, the cam is swung up in such a manner that the lower portion of the cam is disengaged from the engaging step portion of the latch and slips into the recess portion of the latch, and the latch is swung up as the lower portion of the cam slips into the recess portion of the latch, whereby the protruding tooth of the latch is disengaged from any one of the first, second, and third cutout teeth and the seat cushion is brought to a condition where it is allowed to be pivoted and, when the operating lever is released from the pulled condition, the latch and the cam are returned to their original positions by gravity, whereby the protruding tooth of the latch becomes engaged with any one of the first, second, and third cutout teeth.

In the automotive seat constructed as discussed above, when the operating lever is pull-operated to thereby cause the cam to be swung up, the lower portion of the cam is disengaged from the engaging step portion of the latch and slips into the recess portion of the latch which has the depth that is not less than the height of the engaged portion between the protruding tooth of the latch and each of the first, second, and third cutout teeth. As the lower portion of the cam slips into the recess portion of the latch, the latch is swung up, whereby the protruding tooth of the latch is disengaged from any one of the first, second, and third cutout teeth. Thus, the seat cushion is allowed to be pivoted toward each of the middle position and the tipped-up position from the used position.

In a condition where the seat cushion is pivoted to the middle position or the tipped-up position, the operating lever is released from the pulled-condition, the cam and the latch are returned to their original positions by gravity. At this time, the lower portion of the cam becomes abutted against the engaging step portion of the latch, whereby the protruding tooth of the latch is maintained in a condition where it is engaged with the second cutout tooth or the third cutout tooth. Moreover, the angle of the cam relative to the latch is set in such a manner that the angle between the reference line connecting the axial center of the second support pin of the latch and the abutment point of the lower portion of the cam against the engaging step portion of the latch, and the line connecting the axial center of the third support pin of the cam and the abutment point is kept to be an acute angle, so that the cam functions as a prop with respect to the engaging step portion of the latch and the latch is held so as to be unable to be swung, so that even if a person unintentionally tries to lift the seat cushion up toward the middle position or the tipped-up position, the engagement between the protruding tooth and the first cutout tooth of the side bracket of the seat cushion is positively maintained.

In an embodiment of the present invention, the lower portion of the cam may be formed into a substantially semiellipse-shape, a bottom surface of the engaging step portion of the latch may be formed into a substantially J-shape, and the recess portion of the latch may be formed into a substantially U-shape having a depth larger than the height of the engaged portion between the protruding tooth of the latch and each of the first, second, and third cutout teeth.

In this case, when the operating lever is pull-operated and the cam is swung up in such a manner that the lower portion of the cam is disengaged from the engaging step portion of the latch and moved toward the recess portion of the latch, the lower portion of the cam deeply slips into the recess portion of the latch. As the lower portion of the cam deeply slips into the recess portion of the latch, the latch becomes considerably swung up, so that the protruding tooth of the latch can be positively disengaged from any one of the first, second, and third cutout teeth of the side bracket of the seat cushion.

### BRIEF DESCRIPTION OF THE DRAWINGS

Fig. 1 is a schematic side view of a tip-up type automotive seat according to an embodiment of the present invention;
Fig. 2 is a side view of a tipping-up lock mechanism provided at the automotive seat shown in Fig. 1;
Fig. 3 is a schematic fragmentary side view which is of assistance in explaining a principle of locking of a seat cushion of the automotive seat by the tipping-up lock mechanism shown in Fig.2;
Fig. 4 is a schematic-side view illustrating a stand leg portion provided at the tip-up type automotive seat shown in Fig. 1;
Figs. 5a, 5b, and 5c are each an explanatory view of a condition of a wire coupled to the stand leg portion, during pivotal movement of the seat cushion;
Fig. 6 is a schematic view which is of assistance in explaining operation of the tipping-up lock mechanism of Fig. 2 by which the seat cushion is unlocked with respect to a seat back of the automotive seat;
Fig. 7 is an explanatory view of a condition in which the seat cushion is unlocked with respect to the seat back;
Fig. 8 is a schematic side view of the automotive seat which is of assistance in explaining the pivotal movement of the seat cushion to a middle position from a used position;
Fig. 9 is a schematic side view of the automotive seat in which the seat cushion is located in the middle position;
Fig. 10 is a schematic view which is of assistance in explaining returning of a latch and a cam of the tipping-up lock mechanism to their original positions;
Fig. 11 a schematic view illustrating a condition where the seat cushion is locked in the middle position by the tipping-up lock mechanism;
Fig. 12 is a schematic side view illustrating a condition where the seat cushion is pivoted to a tipped-up position; and
Fig. 13 is a schematic side view illustrating a condition where the seat cushion is locked in the tipped-up position by the tipping-up lock mechanism.

### DETAILED DESCRIPTION OF THE PREFERRED EMBODIMENT

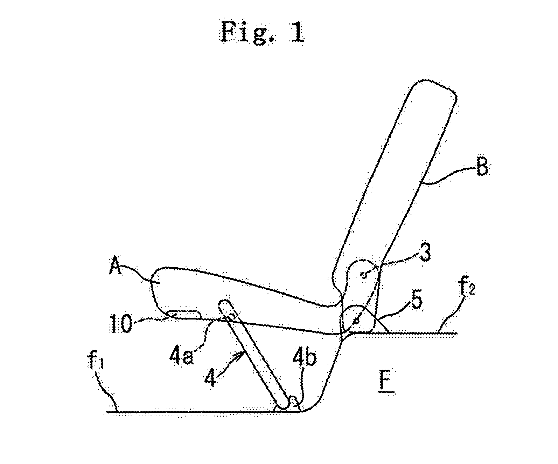

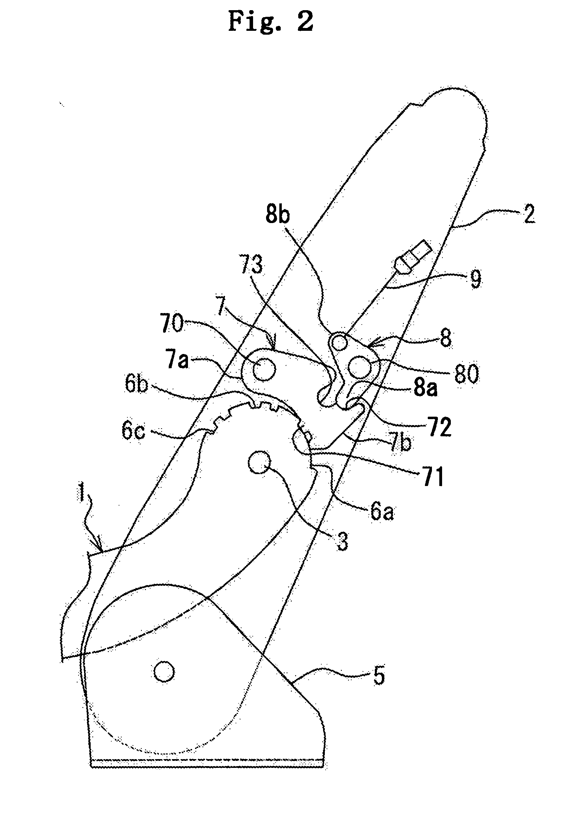

Referring to Fig. 1, there is illustrated a tip-up type automotive seat according to an embodiment of the present invention, which includes a seat cushion A and a seat back B. Referring to Fig. 2, the seat cushion includes a pair of spaced apart side brackets 1 serving as side frame sections of a seat cushion frame for the seat cushion, and the seat back includes a pair of spaced apart side brackets 2 serving as side frame sections of a seat back frame for the seat back (only one side bracket 1 of the seat cushion and only one side bracket 2 of the seat back are shown in Fig. 2). The side brackets 1 of the seat cushion are pivotally supported at upwardly curved rear portions thereof to portions of the side brackets 2 of the seat back, which are adjacent lower end portions of the side brackets 2 of the seat back, by support pins 3, so that the seat cushion is allowed to be pivoted or tipped up around the support pins 3 from a used position, at which the seat cushion becomes a substantially horizontal posture, to a tipped-up position at which the seat cushion becomes opposed to the seat back in a substantially vertical posture.

As shown in Fig. 1, the tip-up type automotive seat is provided with a stand leg portion 4. The stand leg portion 4 is formed into a substantially U-shape in outline and pivotally supported at upper end regions of spaced apart vertical portions thereof to lower regions of forward portions of the side brackets of the seat cushion A by support pins 4a. A receiving base 4b for receiving and releasably engaging a lower horizontal portion of the stand leg portion 4 is mounted on a lower step portion f₁ of an automotive body floor F. The stand leg portion 4 is adapted to be releasably engaged at the lower horizontal portion thereof with the receiving base 4b so as to be obliquely stand up from the lower step portion f₁ of the automotive body floor F, whereby when the seat cushion is locked in the used position by a tipping-up lock mechanism for releasably locking the seat cushion with respect to the seat back and preventing the pivotal movement of the seat cushion, which will be discussed in detail hereinafter, the seat cushion is maintained in the substantially horizontal posture by the stand leg portion 4. Moreover, the seat back is supported at the lower end portions of the side brackets thereof to a pair of spaced apart base brackets 5 mounted on an upper step portion f₂ of the automotive body floor F so as to stand up from the upper step portion f₂.

As briefly discussed above, the tip-up type automotive seat according to the embodiment of the present invention is provided with the tipping-up lock mechanism. In the illustrated example, the tipping-up lock mechanism is provided on one of both sides of the automotive seat. As shown in Fig. 2, the upwardly curved rear portions of the side brackets 1 of the seat cushion have substantially semicircle-shaped edges extending about the support pins 3 of the side brackets 1. The tipping-up lock mechanism includes first, second, and third spaced apart cutout teeth 6a, 6b, 6c which are provided at a substantially semicircle-shaped edge of one of the side brackets 1 of the seat cushion so as to be in turn arranged from a rearward direction of the substantially semicircle-shaped edge to a forward direction of the substantially semicircle-shaped edge. More particularly, the first cutout tooth 6a, the second cutout tooth 6b, and the third cutout tooth 6c are provided at a rearward region of the substantially semicircle-shaped edge, at a middle region of the substantially semicircle-shaped edge, and at a forward region of the substantially semicircle-shaped edge, respectively. The first cutout tooth 6a serves as means to facilitate causing of the seat cushion to be kept in the used position. The third cutout tooth 6c serves as means to facilitate causing of the seat cushion to be kept in the tipped-up position. The second cutout tooth 6b serves as means to facilitate causing of the seat cushion to be kept in a middle position between the used position and the tipped-up position.

The tipping-up lock mechanism further includes a latch 7 and a cam 8. The latch 7 is pivotally supported at a forward portion 7a thereof to a corresponding side bracket 2 of the seat back by a support pin 70 so as to be swingable upward. The cam 8 includes a body and a lower portion 8a extending downward from the cam body. The cam 8 is swingably supported at a substantially middle portion thereof to the side bracket 2 of the seat back by a support pin 80 with the lower portion 8a being directed toward an upper region of a rearward portion 7b of the latch 7.

The latch 7 is provided at a lower edge of the rearward portion 7b thereof with a protruding tooth 71 which is adapted to be selectively and releasably engaged with the first, second, and third cutout teeth 6a, 6b, 6c, whereby the seat cushion is selectively and releasably locked in the used position, in the middle position, and the tipped-up position. In order that the protruding tooth 71 of the latch 7 can be securely engaged with the second and third cutout teeth 6b, 6c, the protruding tooth 71 is configured to include two protruding tooth-portions which are spaced apart from each other in the forward/rearward direction. Incidentally, the first cutout tooth 6a is configured to have a recess portion which extends along a region of the substantially semicircle-shaped edge of the side bracket 1 and is adapted to receive the protruding tooth 71 of the latch 7 during the pivotal movement of the seat cushion to the used position from the middle position or the tipped-up position.

In addition to the protruding tooth 71, the latch 7 includes an engaging step portion 72 against which the lower portion 8a of the cam 8 is abutted, and a recess portion 73 for allowing the cam 8 to be swung. The engaging step portion 72 and the recess portion 73 are formed in the upper region of the rearward portion 7b of the latch 7. The recess portion 73 of the latch 7 extends continuously from an edge of the engaging step portion 72 and is formed so as to have a depth which is not less than a height of an engaged portion between the protruding tooth 71 of the latch 7 and each of the first, second, and third cutout teeth 6a, 6b, 6c, in order that the protruding tooth 71 of the latch 7 can be escapingly disengaged from the cutout teeth 6a, 6b, 6c.

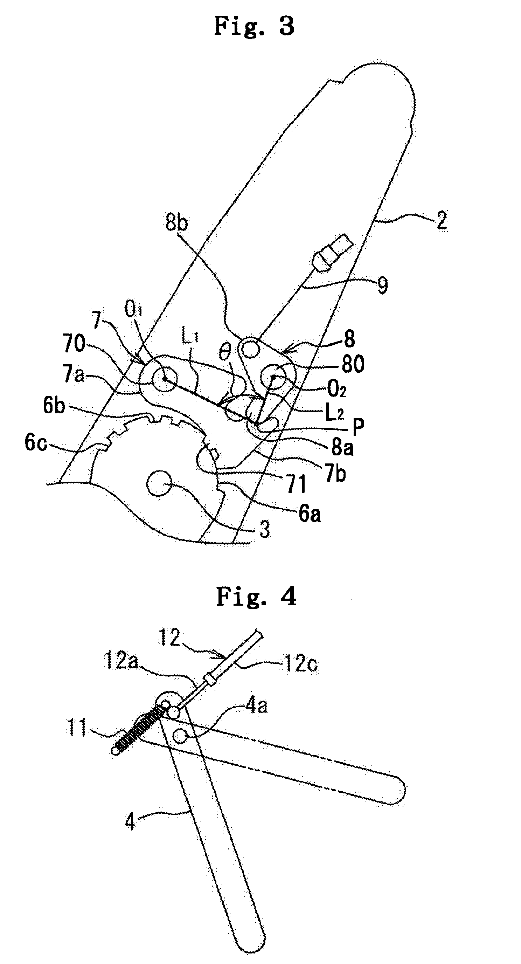

Referring now to Fig. 3, an angle of the cam 8 relative to the latch 7 is set in such a manner that an angle θ between a reference line L₁ connecting an axial center O₁ of the support pin 70 of the latch 7 and an abutment point P of the lower portion 8a of the cam 8 against the engaging step portion 72 (Fig. 2), and a line L₂ connecting an axial center O₂ of the support pin 80 of the cam 8 and the abutment point P is kept to be an acute angle. Thus, the cam 8 functions as a prop with respect to the engaging step portion 72 of the latch 7, so that when the lower portion 8a of the cam 8 is abutted against the engaging step portion 72 of the latch 7, the engagement between the protruding tooth 71 of the latch 7 and the cutout tooth 6a, 6b or 6c of the side bracket 1 of the seat cushion can be positively maintained. A bottom surface of the engaging step portion 72 of the latch 7 is formed so as to be adjacent the protruding tooth 71 of the latch 7, so that the reference line L₁ is set so as to be descent rearward from the axial center O₁ of the support pin 70 of the latch 7.

In the illustrated example, the lower portion 8a of the cam 8 is formed into a substantially semiellipse-shape. Correspondingly to such a shape of the lower portion 8a of the cam 8, the bottom surface of the engaging step portion 72 of the latch 7 is formed into a substantially J-shape. Moreover, the substantially J-shaped bottom surface of the engaging step portion 72 is formed so as to have a curve surface which allows at least half or more region of the lower portion 8a of the cam 8 to be received by the engaging step portion 72, so that the lower portion 8a of the cam 8 can be positively abutted against the engaging step portion 72 of the latch 7 and stably received by the engaging step portion 72.

In the illustrated example, the recess portion 73 of the latch 7 may be formed into a substantially U-shape which has a depth larger than the height of the engaged portion between the protruding tooth 71 of the latch 7 and each of the first, second, and third cutout teeth 6a, 6b, 6c of the side bracket 1 of the seat cushion and which fits the lower portion 8a of the cam 8. When the cam 8 is pulled up as will be discussed in detail hereinafter, the recess portion 73 of the latch 7 serves to allow the cam 8 to be swung up in such a manner that the lower portion 8a of the cam 8 slips into the recess portion 73 of the latch 7 while being disengaged from the engaging step portion 72. As the lower portion 8a of the cam 8 slips into the recess portion 73 of the latch 7, the latch 7 is swung up. By the swinging-up of the latch 7 which is brought about by the swinging-up of the cam 8, the protruding tooth 71 of the latch 7 is positively disengaged from any one of the cutout teeth 6a, 6b, 6c of the side bracket 1 of the seat cushion.

The cam 8 is formed into a substantially L-shape in outline. A wire 9 of a first wire cable which is inserted through a tube of the first wire cable is coupled at one end portion thereof to an upper end portion 8b of the cam body. The other end portion of the wire 9 is connected to an operating lever 10 (see Fig. 1). As shown in Fig. 1, the operating lever 10 is swingably provided in a recess portion formed in a lower region of a forward-section of the seat cushion A and is adapted to be pulled by a person. When the person inserts his/her hand into the recess portion of the seat cushion A and pulls the operating lever 10 with his/her hand, the tipping-up lock mechanism becomes unlocked as will be discussed in detail hereinafter. In the condition where the tipping-up lock mechanism is unlocked, the person can manually cause the seat cushion to be tipped up in one motion.

Referring to Fig. 4, the stand leg portion 4 is typically urged toward a stored position under the seat cushion by a tension spring 11 which is retained at one end thereof to an upper end region of one of the spaced apart vertical portions of the substantially U-shaped stand leg portion 4 which is located upward of a support pin 4a of the vertical portion, and retained at the other end thereof to a forward portion of the side bracket of the seat cushion. Moreover, a wire of a second wire cable 12 which is inserted through a tube 12c of the second wire cable 12 is coupled at one end portion 12a thereof to the upper end region of the vertical portion of the substantially U-shaped stand leg portion 4 and coupled at the other end portion thereof (not shown) to the seat back.

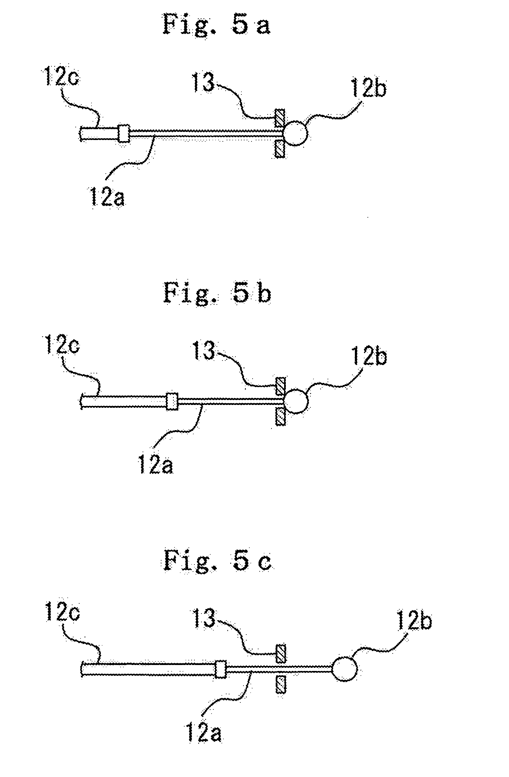

Referring to Figs. 5a to 5c, the other end portion 12b of the wire of the second wire cable 12 is supported to a retaining piece 13 which is provided at a suitable portion of the seat back frame. The other end portion 12b of the wire of the second wire cable 12 is provided with a spherical end stop 12d and penetrated through a slit of the retaining piece 13 so as to be movable relative to the retaining piece 13.

When the seat cushion is located at the used position, the wire of the second wire cable 12 is in a condition shown in Fig. 5a. In this condition, when the person causes the seat cushion to be released from the seat back by operating the operating lever 10 (Fig. 1) and then causes the seat cushion to be tipped up toward a position just before the middle position while allowing the stand leg portion 4 to be disengaged from the receiving base 4b (Fig. 1) due to the tipping-up movement of the seat cushion, the wire of the second cable 12 is pulled against an action of the tension spring (as shown in Fig. 5b) so as to allow the stand leg portion 4 to be pivoted toward a developed position until the seat cushion reaches the position just before the middle position. On the other hand, as the seat cushion is pivoted toward the middle position from the position just before the middle position, the action of the tension spring 11 (Fig. 4) is exerted on the wire of the second wire cable 12, whereby the wire of the second wire cable 12 is moved in such a manner that the wire end portion 12b thereof is moved relative to the retaining piece 13 so as to project from the retaining piece 13 as shown in Fig. 5c. Thus, when the seat cushion reaches the middle position, the stand leg portion 4 is moved to the stored position by the action of the tension spring 11. More particularly, the stand leg portion 4 can be pivoted toward the stored position synchronously with the tipping-up movement of the seat cushion and can be pivoted toward the developed position synchronously with returning of the seat cushion to the used position. Incidentally, any suitable conventional compensator (not shown) for compensating a pulling force exerted on the wire of the second cable wire 12 and adjusting a total length of the wire of the second wire cable 12 is provided at a suitable portion of the wire of the second wire cable 12.

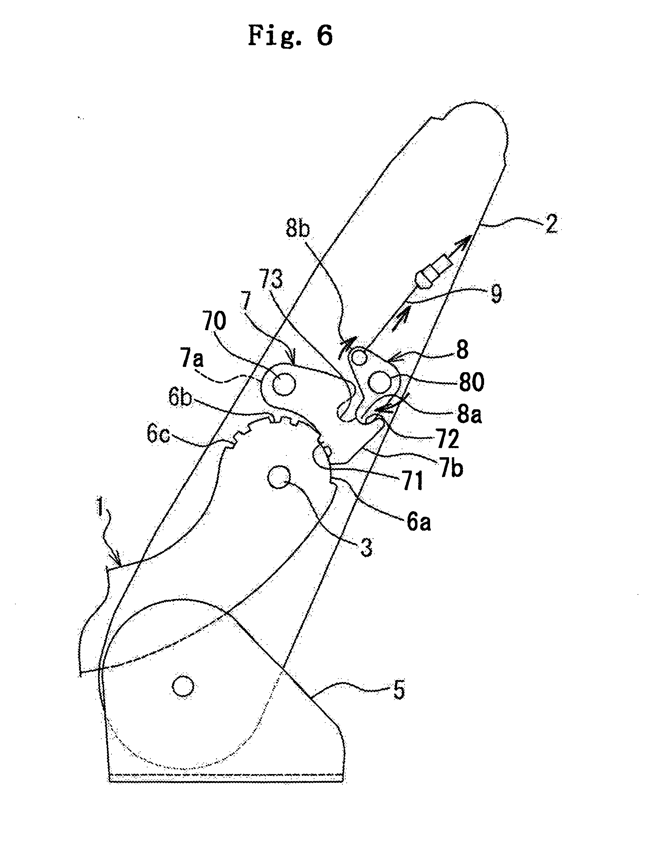

In the tip-up type automotive seat constructed as discussed above, when the operating lever 10 is pull-operated by the person, an upward pulling force is applied to the cam 8 through the wire 9 of the first wire cable as shown in Fig. 6. By the pulling force, the cam 8 is swung in a clockwise direction around the support pin 80, whereby the lower portion 8a of the cam 8 is disengaged from the engaging step portion 72 of the latch 7 and slips into the recess portion 73 of the latch 7.

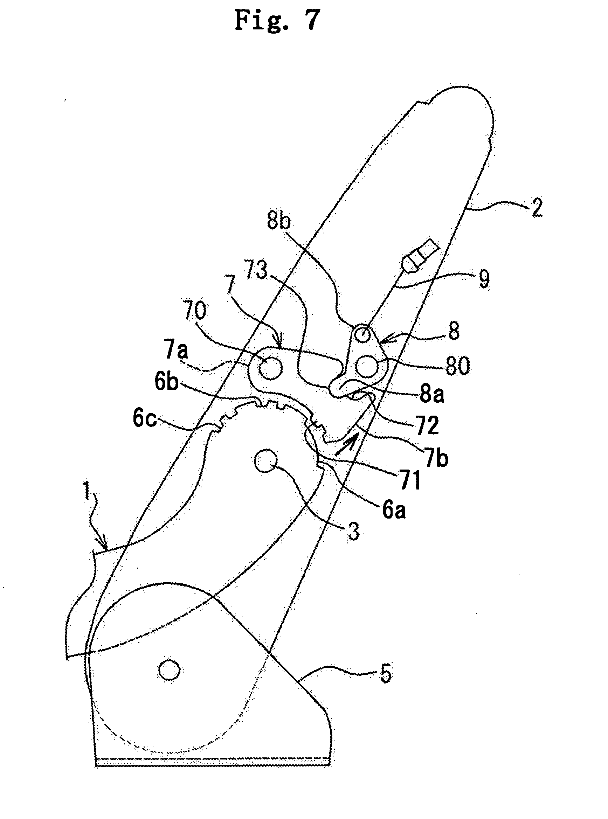

As the lower portion 8a of the cam 8 is moved toward the recess portion 73 of the latch 7 and slips into the recess portion 73, the latch 7 is swung upward in a counterclockwise direction about the support pin 70, whereby the protruding tooth 71 of the latch 7 is disengaged from the cutout tooth 6a (6b or 6c) as shown in Fig. 7. Thus, the seat cushion is brought to an unlocked condition where it is released from the seat back. As discussed above, the recess portion 73 of the latch 7 is formed so as to have the depth which is not less than the height of the engaged portion between the protruding tooth 71 of the latch 7 and each of the cutout teeth 6a, 6b, 6c, so that when the lower portion 8a of the cam 8 slips into the recess portion 73 and the latch 7 is swung up, the protruding tooth 71 of the latch 7 can be positively disengaged from the cutout tooth 6a, 6b, or 6c.

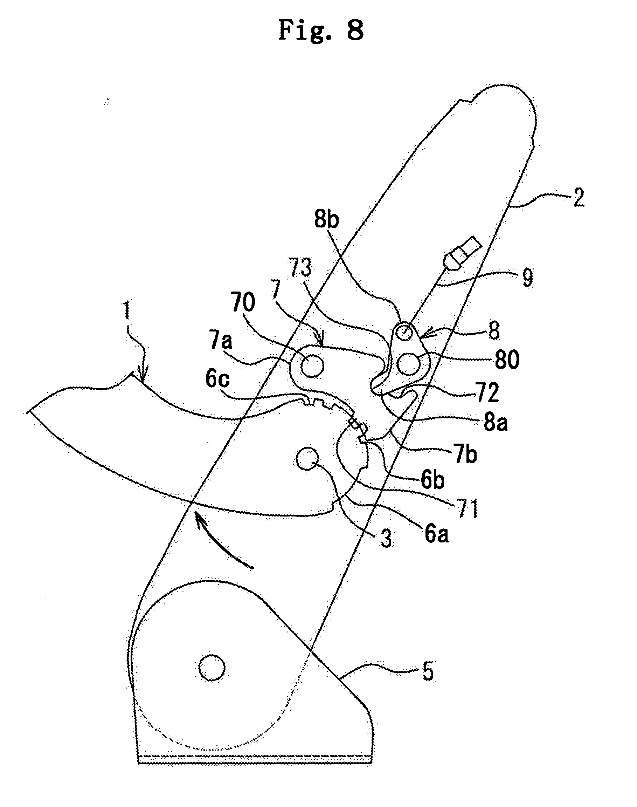

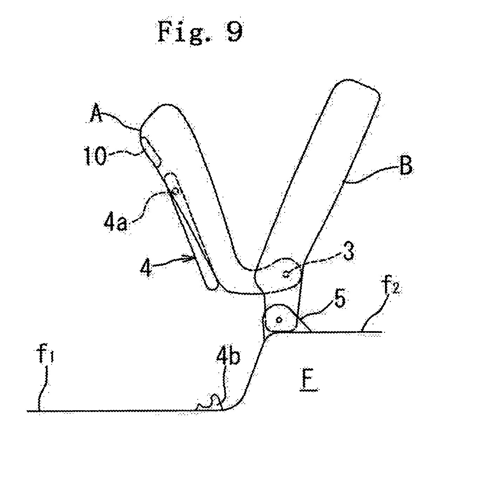

In a case where the seat cushion is located in the used position, the protruding tooth 71 of the latch 7 is disengaged from the first cutout tooth 6a of the side bracket 1 of the seat cushion by operating the operating lever 10, and the seat cushion is to be locked in the middle position, the person lifts up the seat cushion with his/her hand while leaving the operating lever 10 pulled and can cause the seat cushion to be locked in the middle position as shown in Figs. 8 and 9, by releasing his/her hand from the operating lever. In the middle position, the stand leg portion 4 is stored in the stored position.

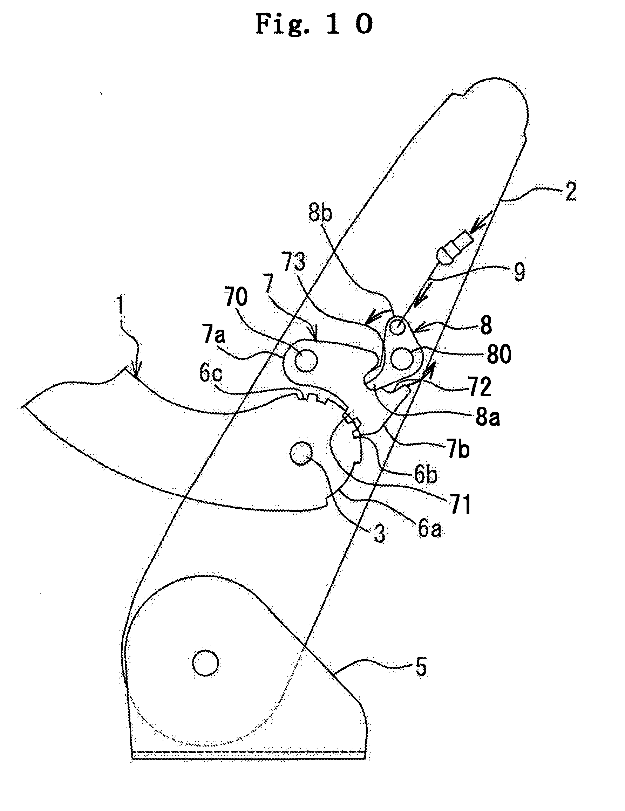

When the seat cushion reaches the middle position and the operating lever is released from the pulled condition, the latch 7 is swung back about the support pin 70 by gravity and the cam 8 is also swung back toward its original position by gravity as indicated by arrows in Fig. 10.

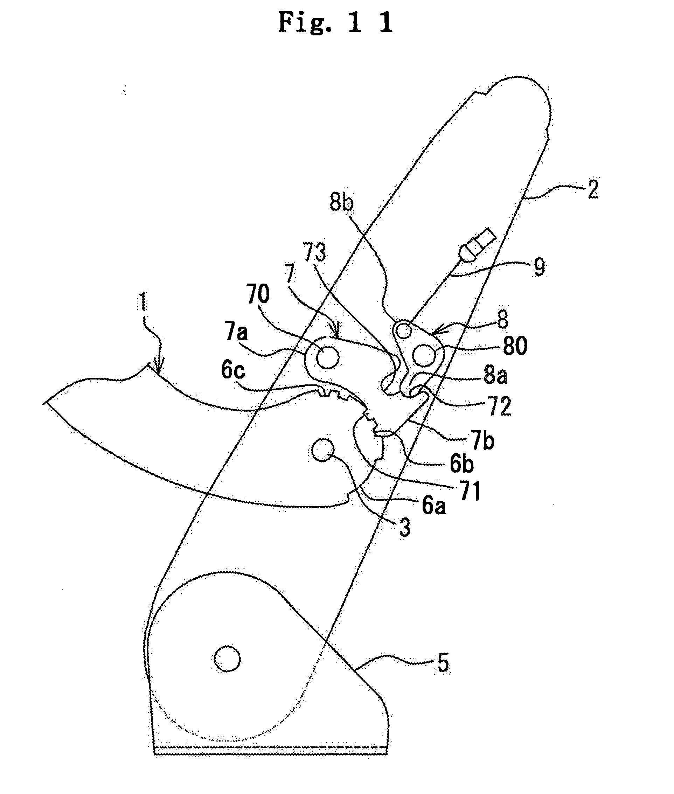

When the cam 8 is swung back toward the original position while being released from the recess portion 73 of the latch 7, and the lower portion 8a of the cam 8 is operatively abutted against the engaging step portion 72 of the latch 7 as shown in Fig. 11, the protruding tooth 71 of the latch 7 becomes engaged with the second cutout tooth 6b of the side bracket 1 of the seat cushion. At this time, the cam 8 functions as the prop with respect to the latch 7 as discussed above, so that the engagement between the protruding tooth 71 of the latch 7 and the second cutout tooth 6b of the side bracket 1 of the seat cushion can be positively maintained. In this condition, any baggage or luggage can be stored in a space between the seat cushion locked in the middle position and the seat back in the substantially vertical posture. Even if the baggage or luggage is stored in the space between the seat cushion locked in the middle position and the seat back in the substantially vertical posture, the seat cushion can withstand a load applied to the seat cushion by the baggage of luggage, since the seat cushion is locked with respect to the seat back by the tipping-up lock mechanism.

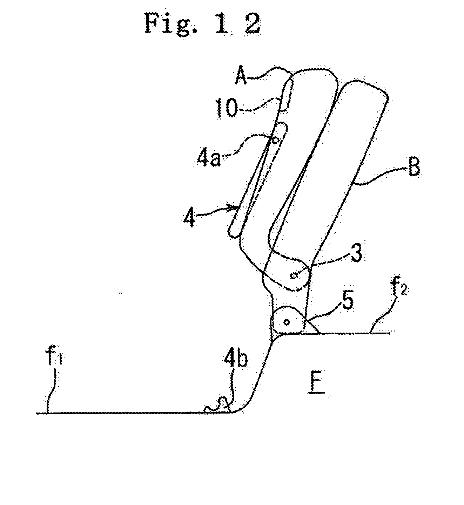

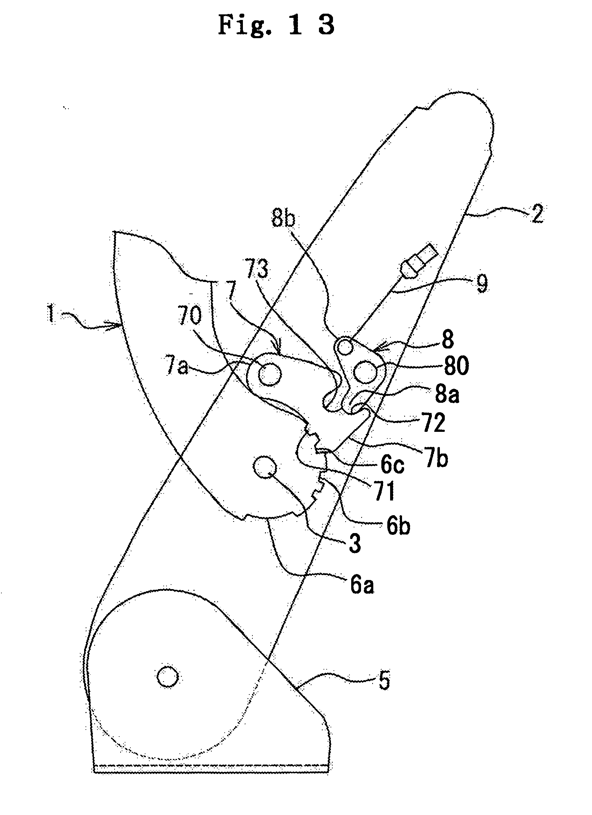

Moreover, in a case where the seat cushion locked in the middle position is to be pivoted to the tipped-up position from the middle position, the person causes the protruding tooth 71 of the latch 7 to be disengaged from the second cutout tooth 6b of the side bracket 1 by pull-operating the operating lever in the same manner as discussed above and can cause the seat cushion to be pivoted to the tipped-up position. When the seat cushion reaches the tipped-up position as shown in Fig. 12 and the operating lever is released from the pulled-condition, the protruding tooth 71 of the latch 7 becomes operatively engaged with the third cutout tooth 6c of the side bracket 1 of the seat cushion as shown in Fig. 13. Thus, the seat cushion is locked in the tipped-up position by the tipping-up lock mechanism.

Moreover, in a case where the seat cushion locked in the tipped-up position is to be returned to the used position, the person causes the protruding tooth 71 of the latch 7 to be disengaged from the third cutout tooth 6c of the side bracket 1 of the seat cushion by pull-operating the operating lever in the same manner as discussed above and can cause the seat cushion to be returned to the used position. When the seat cushion reaches the used position and the operating lever is released from the pulled-condition, the cam 8 and the latch 7 are returned to their original positions by gravity and the protruding tooth 71 of the latch 7 becomes operatively engaged with the first cutout tooth 6a of the side bracket 1 of the seat cushion. Thus, the seat cushion is locked in the used position by the tipping-up lock mechanism. As the seat cushion passes the middle position and reaches to a position before the used position, the stand leg portion is pivoted and reaches the developed position at which the stand leg portion 4 is then operatively engaged with the receiving base 4b.

While the case where the tipping-up lock mechanism is provided on the one side of the automotive seat has been discussed above with respect to the embodiment, a second tipping-up lock mechanism constructed in the same manner as the first tipping-up lock mechanism is done may be provided on the other side of the automotive seat. In this case, a cam of the second tipping-up lock mechanism is coupled to the operating lever 10 via a wire cable.

## Claims

1. A tip-up type automotive seat comprising:
a seat back (B) including a pair of first spaced apart side brackets (2);
a seat cushion (A) including a pair of second spaced apart side brackets (1);
said second side brackets (1) having upwardly curved rear portions;
said second side brackets (1) being pivotally supported at said upward curved rear portions thereof to portions of said first side brackets (2) of said seat back (B),
which are adjacent lower end portions of said first side brackets (2) of said seat back (B), by first support pins (3), whereby said seat cushion (A) is allowed to be pivoted about said first support pins (3) from a used position, at which said seat cushion (A) becomes a substantially horizontal posture, to a tipped-up position at which said seat cushion (A) becomes opposed to said seat back (B) in a substantially vertical posture;
said upwardly curved rear portions of said second side brackets (1) being formed so as to have substantially semicircle-shaped edges extending around said first support pins (3);
a tipping-up lock mechanism for locking said seat cushion (A) with respect to said seat back (B); and
an operating lever (10) for causing said tipping-up lock mechanism to be unlocked and causing said seat cushion (A) to be brought to a condition where said seat cushion (A) is allowed to be pivoted;
said operating lever (10) being swingably provided at said seat cushion (A);
**characterized in that**
said tipping-up lock mechanism is adapted to selectively and releasably lock said seat cushion (A) with respect to said seat back (B), in said used position, said tipped-up position, and a middle position between said used position and said tipped-up position; said tipping-up lock mechanism including a latch (7), a cam (8), and first, second, and third cutout teeth (6a, 6b, 6c);
said first, second, and third cutout teeth (6a, 6b, 6c) being provided at a substantially semicircle-shaped edge of an upward curved rear portion of one of said second side brackets (1) so as to be in turn arranged from a rearward direction of said substantially semicircle-shaped edge toward a forward direction of said substantially semicircle-shaped edge;
said first cutout tooth (6a) serving as means to facilitate causing of said seat cushion (A) to be releasably locked in said used position;
said second cutout tooth (6b) serving as means to facilitate causing of said seat cushion (A) to be releasably locked in said middle position;
said third cutout tooth (6c) serving as means to facilitate causing of said seat cushion (A) to be releasably locked in said tipped-up position;
said latch (7) being swingably supported via a second support pin (70) to corresponding one of said first side brackets (2) of said seat back (B);
said latch (7) including a protruding tooth (71) provided at a lower edge of a rearward portion (7b) of said latch (7) for selectively and releasably engaging said first, second, and third cutout teeth (6a, 6b, 6c), an engaging step portion (72) formed in an upper region of said rearward portion (7b) of said latch (7), and a recess portion (73) formed in said upper region of said rearward portion (7b) of said latch (7) so as to continue from an edge of said engaging step portion (72);
said cam (8) having a body and a lower portion (8a) extending downward from said cam body;
said cam (8) being swingably supported via a third support pin (80) to said corresponding one of said first
side brackets (2) of said seat back (B) with said lower portion (8a) thereof being releasably abutted against said engaging step portion (72) of said latch (7);
said cam (8) having an angle with respect to said latch (7), said angle being set in such a manner that an angle (θ) between a reference line (L₁) connecting an axial center (O₁) of said second support pin (70) of said latch (7) and an abutment point (P) of said lower portion (8a) of said cam (8) against said engaging step portion (72) of said latch (7), and a line (L₂) connecting an axial center (O₂) of said third support pin (80) of said cam (8) and said abutment point (P) is kept to be an acute angle;
said operating lever (10) being coupled to said cam (8); and
said recess portion (73) of said latch (7) having a depth which is not less than a height of an engaged portion between said protruding tooth (71) of said latch (7) and each of said first, second, and third cutout teeth (6a, 6b, 6c), so that when said cam (8) is pulled up by pulling of said operating lever (10), said cam (8) is swung up in such a manner that said lower portion (8a) of said cam (8) is disengaged from said engaging step portion (72) of said latch (7) and slips into said recess portion (73) of said latch (7), and said latch (7) is swung up as said lower portion (8a) of said cam (8) slips into said recess portion (73) of said latch (7), whereby said protruding tooth (71) of said latch (7) is disengaged from any one of said first, second, and third cutout teeth (6a, 6b, 6c) and said seat cushion (A) is brought to a condition where it is allowed to be pivoted and, when said operating lever (10) is released from the pulled condition, said latch (7) and said cam (8) are returned to their original positions by gravity, whereby said protruding tooth (71) of said latch (7) becomes engaged with any one of said first, second, and third cutout teeth (6a, 6b, 6c).

2. A tip-up type automotive seat according to claim 1, wherein said
lower portion (8a) of said cam (8) is formed into a substantially semiellipse-shape, a bottom surface of said engaging step portion (72) of said latch (7) is formed into a substantially J-shape, and said recess portion (73) of said latch (7) is formed into a substantially U-shape having a depth larger than said height of said engaged portion between said protruding tooth (71) of said latch (7) and each of said first, second, and third cutout teeth (6a, 6b, 6c).

## Patentansprüche

1. Ein Klappfahrzeugsitz umfassend
eine Rückenlehne (B) einschließlich eines ersten Paares zueinander beabstandeter Seitenbeschläge (2);
ein Sitzkissen (A) einschließlich eines zweiten Paares zueinander beabstandeter Seitenbeschläge (1);
wobei die zweiten Seitenbeschläge (1) nach oben gebogene hintere Abschnitte aufweisen;
wobei die zweiten Seitenbeschläge (1) über erste Haltestifte (3) an den nach oben gebogenen hinteren Abschnitten relativ zu Abschnitten der ersten Seitenschläge (2) der Rückenlehne (B) drehbar angeordnet sind, die benachbart sind zu einem unteren Endabschnitt der ersten Seitenbeschläge (2) der Rückenlehne (B), wobei das Sitzkissen (A) um die ersten Haltestifte (3) drehbar ist, von einer Sitzposition, in der das Sitzkissen (A) eine im Wesentlichen horizontale Position einnimmt, in eine hochgeklappte Position, in der das Sitzkissen (A) in eine im Wesentlichen vertikale Position gegenüber der Rückenlehne (B) gelangt;
die nach oben gebogenen hinteren Abschnitte der zweiten Seitenbeschläge (1) formen im Wesentlichen halbkreisförmige Kanten aus, die sich um die ersten Haltestifte (3) ausdehnen;
einen Klappmechanismus, um das Sitzkissen (A) gegenüber der Rückenlehne (B) zu verriegeln; und
einen Bedienhebel (10), um den Klappmechanismus zu entriegeln und um das Sitzkissen (A) in einen Zustand des Sitzkissens (A) zu bringen, in dem dieses drehbar ist; wobei der Bedienhebel (10) drehbar an dem Sitzkissen (A) befestigt ist;
**dadurch gekennzeichnet,**
**dass** der Klappmechanismus ausgebildet ist, um das Sitzkissen (A) wahlweise und lösbar gegenüber der Rückenlehne (B) in der Sitzposition, in der hochgeklappten Position und in einer mittleren Position zwischen der Sitzposition und der hochgeklappten Position zu verriegeln;
der Klappmechanismus umfasst eine Klinke (7), einen Nocken (8), eine erste, eine zweite und eine dritte Verzahnungsausnehmung (6a, 6b, 6c);
die erste, zweite und dritte Verzahnungsausnehmung (6a, 6b, 6c) ist an einer im Wesentlichen halbkreisförmigen Kante eines nach oben gerundeten Abschnitts eines der zweiten Seitenbeschläge (1) angeordnet und zwar der Reihe nach von einer rückwärtigen Richtung der im Wesentlichen halbkreisförmigen Kante zu einer vorderen Richtung der im Wesentlichen halbkreisförmigen Kante;
die erste Verzahnungsausnehmung (6a) dient als Mittel, um das Sitzkissen (A) lösbar in der Sitzposition zu verriegeln;
die zweite Verzahnungsausnehmung (6b) dient als Mittel, um das Sitzkissen (A) lösbar in der mittleren Position zu verriegeln;
die dritte Verzahnungsausnehmung (6c) dient als Mittel, um das Sitzkissen (A) lösbar in der hochgeklappten Position zu verriegeln;
die Klinke (7) ist drehbar über einen zweiten Haltestift (70) an dem entsprechenden ersten Seitenbeschlag (2) der Rückenlehne (B) befestigt;
die Klinke umfasst einen vorspringenden Zahn (71), der an einer unteren Kante eines rückwärtigen Abschnitts (7b) der Klinke (7) angeordnet ist, zum wahlweisen und lösbaren Eingriff in die erste, die zweite und die dritte Verzahnungsausnehmung (6a, 6b, 6c), einen Halteabschnitt (72), der in einem oberen Bereich des rückwärtigen Abschnitts (7b) der Klinke (7) ausgeformt ist und eine Aussparung (73), die in dem oberen Bereich des rückwärtigen Abschnitts (7b) der Klinke (7), ausgehend von einer Kante des Halteabschnitts (72), ausgeformt ist; die Nocke (8) umfasst einen Körper und einen unteren Abschnitt (8a), der sich nach unten, ausgehend von dem Nockenkörper, ausdehnt;
der Nocken (8) ist mit dem unteren Abschnitt (8a) über einen dritten Haltestift (80) an dem entsprechenden ersten Seitenbeschlag (2) der Rückenlehne (B) drehbar befestigt und hierbei an den Halteabschnitt (72) der Klinke (7) lösbar angrenzend angeordnet;
der Nocken (8) beschreibt einen Winkel bezüglich der Klinke (7), wobei der Winkel derart gewählt ist, dass ein Winkel (θ) zwischen einer Referenzlinie (L₁), die ein axiales Zentrum (O₁) des zweiten Haltestifts (70) der Klinke (7) und einen Begrenzungspunkt (P) des unteren Abschnitts (8a) des Nockens (8) gegen den Halteabschnitt (72) der Klinke (7) verbindet, und eine Linie (L₂), die ein axiales Zentrum (O₂) des dritten Haltestifts (80) des Nockens (8) und den Begrenzungspunkt (P) verbindet, ein spitzer Winkel ist;
der Bedienhebel (10) ist gekoppelt mit dem Nocken (8); und
die Aussparung (73) der Klinke (7) hat eine Tiefe, die nicht geringer ist als eine Höhe eines Halteabschnitts zwischen dem vorspringenden Zahn (71) und der Klinke (7) und jedem der ersten, zweiten und dritten Verzahnungsausnehmung (6a, 6b, 6c), so dass, bei durch den Bedienhebel (10) gezogenen Nocken (8), der Nocken (8) in einer Art und Weise hochgedreht wird, dass der untere Abschnitt (8a) des Nockens (8) außer Eingriff gebracht wird zu dem Halteabschnitt (72) der Klinke (7) und in die Aussparung (73) der Klinke (7) rutscht und die Klinke (7) hoch gedreht wird, während der untere Abschnitt (8a) des Nockens (8) in die Aussparung (73) der Klinke (7) rutscht, wobei der vorspringende Zahn (71) der Klinke (7) außer Eingriff gebracht zu einem der ersten, zweiten und dritten Haltezähne (6a, 6b, 6c) und das Sitzkissen (A) in einen Zustand gebracht wird, in dem es drehbar ist, wenn der Bedienhebel (10) aus der gezogenen Stellung gelöst wird, die Klinke (7) und der Nocken (8) durch die Schwerkraft in ihre Ausgangsposition zurückkehren, wobei der vorspringende Zahn (71) der Klinke (7) in Eingriff gebracht wird mit einem der ersten, zweiten und dritten Verzahnungsausnehmung (6a, 6b, 6c).

2. Ein Klappfahrzeugsitz gemäß Anspruch 1,
wobei der untere Abschnitt (8a) des Nockens (8) im Wesentlichen halbkreisförmige Form ausgebildet ist, eine untere Fläche des Halteabschnitts (72) der Klinke (7) im Wesentlichen J-förmig ausgebildet ist und die Ausnehmung (73) der Klinke (7) im Wesentlichen U-förmig ausgebildet ist, wobei sie eine Tiefe aufweist, die größer ist als die Höhe des Halteabschnitts zwischen dem vorspringenden Zahn (71) der Klinke (7) und jedem der ersten, zweiten und dritten Verzahnungsausnehmung (6a, 6b, 6c).

## Revendications

1. Siège automobile de type strapontin comprenant:
un dossier (B) qui comprend une paire de premiers supports latéraux espacés (2);
un coussin de siège (A) qui comprend une paire de seconds supports latéraux espacés (1);
lesdits seconds supports latéraux (1) présentant des parties arrière incurvées vers le haut;
lesdits seconds supports latéraux (1) étant supportés à pivotement au niveau de leurs dites parties arrière incurvées vers le haut vers des parties desdits premiers supports latéraux (2) dudit dossier (B), qui sont des parties d'extrémités inférieures adjacentes desdits premiers supports latéraux (2) dudit dossier (5), par des premières broches de support (3), grâce à quoi ledit coussin de siège (A) a la possibilité de pivoter autour desdites premières broches de support (3) à partir d'une position d'utilisation où ledit coussin de siège (A) prend une position sensiblement horizontale, vers une position basculée où ledit coussin de coussin (A) est opposé audit dossier (B) dans une position sensiblement verticale;
lesdites parties arrière incurvées vers le haut desdits seconds supports latéraux (1) étant formées de manière à avoir des bords qui présentent une forme sensiblement semi-circulaire qui s'étendent autour desdites premières broches de support (3);
un mécanisme de verrouillage de basculement destiné à verrouiller ledit coussin de siège (A) par rapport audit dossier (B); et
un levier d'actionnement (10) destiné à provoquer le déverrouillage dudit mécanisme de verrouillage de basculement et à amener ledit coussin de siège (A) dans un état où ledit coussin de siège (A) a la possibilité de pivoter;
ledit levier d'actionnement (10) étant disposé de manière basculante au niveau dudit coussin de siège (A);
**caractérisé en ce que**:
ledit mécanisme de verrouillage de basculement est adapté pour libérer de manière sélective et libérable ledit coussin de siège (A) par rapport audit dossier (B), dans ladite position d'utilisation, ladite position basculée,
et une position médiane située entre ladite position d'utilisation et ladite position basculée;
ledit mécanisme de verrouillage de basculement comprenant un verrou (7), une came (8), et des première, deuxième et
troisième dents échancrées (6a, 6b, 6c);
lesdites première, deuxième et troisième dents échancrées (6a, 6b, 6c) étant disposées au niveau d'un bord qui présente une forme sensiblement semi-circulaire d'une partie arrière incurvée vers le haut de l'un desdits supports latéraux (1) afin de présenter ensuite un agencement à partir d'une direction vers l'arrière dudit bord qui présente une forme sensiblement semi-circulaire vers une direction vers l'avant dudit bord qui présente une forme sensiblement semi-circulaire;
ladite première dent échancrée (6a) servant de moyens destinés à faciliter le verrouillage libérable dudit coussin de siège (A) dans ladite position d'utilisation;
ladite deuxième dent échancrée (6b) servant de moyens destinés à faciliter le verrouillage libérable dudit coussin de siège (A) dans ladite position médiane;
ladite troisième dent échancrée (6c) servant de moyens destinés à faciliter le verrouillage libérable dudit coussin de siège (A) dans ladite position basculée;
ledit verrou (7) étant supporté de manière basculante par l'intermédiaire d'une deuxième broche de support (70) sur l'un correspondant desdits premiers supports latéraux (2) dudit dossier (B);
ledit verrou (7) comprenant une dent qui fait saillie (71) disposée au niveau d'un bord inférieur d'une partie arrière (7b) dudit verrou (7), destinée à venir en prise de manière sélective et libérable avec lesdites première,
deuxième et troisième dents échancrées (6a, 6b, 6c), une partie en palier de mise en prise (72) étant formée dans une région supérieure de ladite partie arrière (7b) dudit verrou (7), et une partie d'évidement (73) étant formée dans ladite région supérieure de ladite partie arrière (7b) dudit verrou (7) de façon à continuer à partir d'un bord de ladite partie en palier de mise en prise (72);
ladite came (8) présentant un corps et une partie inférieure (8a) qui s'étend vers le bas à partir dudit corps de came;
ladite came (8) étant supportée de manière basculante par l'intermédiaire d'une troisième broche de support (80) sur ledit support correspondant desdits premiers supports latéraux (2) dudit dossier (B), ladite partie inférieure (8a) de celui-ci venant en butée de manière libérable contre ladite partie en palier de mise en prise (72) dudit verrou (7);
ladite came (8) présentant un angle par rapport audit verrou (7), ledit angle étant fixé de telle manière qu'un angle (θ) entre une ligne de référence (L₁) qui relie un centre axial (O₁) de ladite deuxième broche de support (70) dudit verrou (7) et d'un point de butée (P) de ladite partie inférieure (8a) de ladite came (8) contre ladite partie en palier de mise en prise (72) dudit verrou (7), et une ligne (L₂) qui relie un centre axial (O₂) de ladite troisième broche de support (80) de ladite came (8) et ledit point de butée (P) soit un angle maintenu aigu;
ledit levier d'actionnement (10) étant couplé à ladite came (8); et
ladite partie d'évidement (73) dudit verrou (7) présentant une profondeur qui n'est inférieure à une hauteur d'une partie mise en prise entre ladite dent qui fait saillie (71) dudit verrou (7) et chacune desdites première, deuxième et troisième dents échancrées (6a, 6b, 6c), de telle sorte que lorsque ladite came (8) est relevée en tirant ledit levier d'actionnement (10),
ladite came (8) soit basculée vers le haut de telle manière que ladite partie inférieure (8a) de ladite came (8) soit désengagée de ladite partie en palier de mise en prise (72) dudit verrou (7) et glisse dans ladite partie d'évidement (73) dudit verrou (7), et ledit verrou (7) soit basculé vers le haut lorsque ladite partie inférieure (8a) de ladite came (8) glisse dans ladite partie d'évidement (73) dudit verrou (7), grâce à quoi ladite dent qui fait saillie (71) dudit verrou (7) est désengagée de l'une quelconque desdites première,
deuxième et troisième dents échancrées (6a, 6b, 6c) et
ledit coussin de siège (A) est amené vers un état où il a la possibilité de pivoter et, lorsque ledit levier d'actionnement (10) est libéré de l'état tiré, ledit verrou (7) et ladite came (8) reviennent vers leurs positions d'origine par l'action de la gravité, grâce à quoi ladite dent qui fait saillie (71) dudit verrou (7) vient en prise avec l'une quelconque desdites première,
deuxième et troisième dents échancrées (6a, 6b, 6c).

2. Siège automobile de type strapontin selon la revendication 1, dans lequel ladite partie inférieure (8a) de ladite came (8) est formée de façon à présenter une forme sensiblement semi-elliptique, une surface inférieure de ladite partie en palier de mise en prise (72) dudit verrou (7) est formée de façon à présenter une forme sensiblement en J, et ladite partie d'évidement (73) dudit verrou (7) est formée de façon à présenter une forme sensiblement en U qui présente une profondeur plus grande que ladite hauteur de ladite partie mise en prise entre ladite dent qui fait saillie (71) dudit verrou (7) et chacune desdites première, deuxième et troisième dents échancrées (6a, 6b, 6c).
